# FASCICULE DE BREVET EUROPEEN

(11) **EP 1 019 262 B1**
(45) Date de publication et mention de la délivrance du brevet: **10.01.2007**
(21) Numéro de dépôt: 98949033.9
(22) Date de dépôt: 09.10.1998
(51) Int. Cl.: B60L 11/18, B62B 5/00

(54) **SYSTEME DE MOTORISATION D'UN CHARIOT DE TRANSPORT D'OBJETS**
ANTRIEBSSYSTEM FÜR EINE TRANSPORTKARRE
SYSTEM FOR EQUIPPING A TROLLEY FOR TRANSPORTING OBJECTS WITH MOTORING MEANS

(30) Priorité: 10.10.1997 FR 9712658
(43) Date de publication de la demande: 19.07.2000
(73) Titulaire: Martine Losego Innovations (MLI), 95420 Magny en Vexin (FR)
(72) Inventeur: Martine Losego Innovations (MLI), 95420 Magny en Vexin (FR)
(74) Mandataire: Breese, Pierre
(86) Numéro de dépôt international: PCT/FR1998/002172
(87) Numéro de publication internationale: WO 1999/019162

(56) Documents cités:
- EP-A- 0 337 038
- EP-A- 0 711 698
- FR-A- 1 408 705
- FR-A- 2 521 923
- FR-A- 2 591 179
- FR-A- 2 604 662

## Description

La présente invention concerne un système de motorisation d'un chariot de transport d'objets.

De tels chariots de transport d'objets sont par exemple utilisés dans les grandes surfaces et on a déjà proposé de les motoriser pour faciliter leur manipulation.

En effet, il arrive fréquemment que de tels chariots aient à transporter des objets lourds et encombrants, ce qui rend leur manipulation difficile.

On a par exemple décrit dans les documents FR-A-2 591 179 et FR-A-2 604 662, des systèmes de motorisation de chariots de transport de ce type, qui comportent des moyens de stockage d'énergie électrique à courant continu, raccordés à travers des moyens de commande d'alimentation à des moyens de motorisation, associés à au moins deux roues du chariot. - EP711698 décrit un véhicule transport et de distribution constitué d'un châssis composé de longerons et de traverses et équipé d'un dispositif de guidage avec un cintre à poignées qui s'appuie sur le sol par un essieu portant des roues arrière non orientables et par deux roues avant de guidage indépendantes l'une de l'autre. Une des roues du bogie est entraînée par un moteur électrique auquel est associée une alimentation en énergie à partir d'une source d'énergie contrôlé par un dispositif de commande réglable de manière progressive.

Le brevet français FR2521923 décrit un véhicule routier à commande par moteur électrique avec au moins deux roues motrices, respectivement un groupe de commande par moteur électrique par roue motrice, un groupe de batteries d'accumulateurs et une unité de commande, les groupes de commande par moteur électrique pouvant fonctionner avec un couple de démarrage élevé et permettant, à l'aide de l'unité de commande, une commutation entre le régime de démarrage et les différentes vitesses. Les groupes de commande par moteur électrique se composent respectivement d'un ou de plusieurs moteurs-série qui, lors du démarrage et pour une conduite en ville, peuvent être couples en série au moyen de l'unité de commande. Pour une conduite rapide, au moins quelques-uns des moteurs-série peuvent être couplés en parallèle au moyen de l'unité de commande.

Le brevet FR1408705 décrit un autre système de véhicule à moteur.

Cependant, dans ces documents, les moyens de motorisation associés aux deux roues du chariot comportent un seul moteur électrique dont l'arbre de sortie est relié à travers un différentiel aux roues correspondantes de ce chariot.

On conçoit alors que ceci présente un certain nombre d'inconvénients, notamment au niveau de la complexité de cette structure.

Le but de l'invention est donc de résoudre ces problèmes.

A cet effet, l'invention a pour objet un système de motorisation d'un chariot de transport d'objets, du type comportant des moyens de stockage d'énergie électrique à courant continu, raccordés à travers des moyens de commande d'alimentation à des moyens de motorisation associés à au moins deux roues du chariot, caractérisé en ce que les moyens de motorisation comprennent deux moteurs électriques connectés en série, associés chacun à l'une des roues correspondantes du chariot et présentant chacun une tension nominale de fonctionnement égale à la moitié de la tension nominale de sortie des moyens de stockage d'énergie électrique.

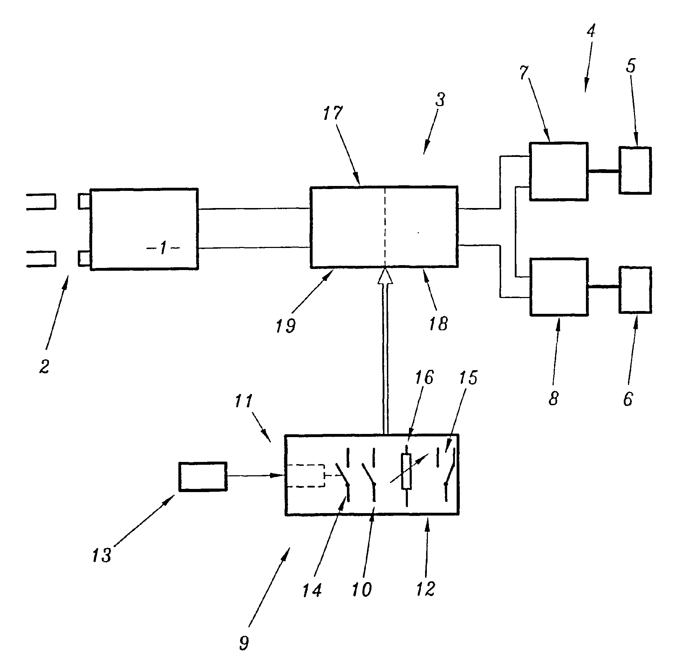

L'invention sera mieux comprise à l'aide de la description qui va suivre, donnée uniquement à titre d'exemple et faite en se référant au dessin annexé qui représente un schéma synoptique illustrant la structure d'un système de motorisation d'un chariot de transport d'objets, selon l'invention.

On reconnaît en effet sur cette figure, un système de motorisation d'un chariot de transport d'objets qui comporte des moyens de stockage d'énergie électrique à courant continu, désignés par la référence générale (1) sur cette figure.

Ces moyens de stockage d'énergie électrique comportent par exemple une batterie de type classique.

De façon classique également, cette batterie est associée à des moyens de charge (2) de celle-ci, constitués par tous moyens appropriés connus dans l'état de la technique.

Ces moyens de charge sont alors activés par exemple lorsque le chariot est dans une position de stockage dans un abri, sur un parking de supermarché ou autre.

Les moyens de stockage d'énergie électrique (1) sont raccordés à travers des moyens de commande d'alimentation, désignés par la référence générale (3), à des moyens de motorisation associés à au moins deux roues du chariot.

Les moyens de motorisation sont désignés par la référence générale (4) sur cette figure et sont par exemple associés à deux roues (5 et 6) du chariot et constituées par exemple par les roues situées à l'arrière de celui-ci.

Selon l'invention, les moyens de motorisation (4) comprennent deux moteurs électriques désignés par les références générales (7 et 8) sur cette figure, qui sont connectés en série et qui sont associés chacun à l'une des roues correspondantes du chariot, c'est-à-dire les roues (5 et 6), de façon classique.

Chaque moteur présente alors une tension nominale de fonctionnement égale à la moitié de la tension nominale de sortie des moyens de stockage d'énergie électrique (1).

Les moyens de commande (3) d'alimentation de ces moyens de motorisation comportent alors une platine de commande désignée par la référence générale (9) sur cette figure.

Cette platine de commande est munie par exemple d'un interrupteur de marche/arrêt désigné par la référence générale (10) sur cette figure, de moyens de verrouillage/déverrouillage de la commande de l'alimentation, désignés par la référence générale (11) sur cette figure et de moyens de contrôle au sens de déplacement du chariot et de régulation de son allure de déplacement, ces moyens étant désignés par la référence générale (12) sur cette figure.

En fait, les moyens de verrouillage/déverrouillage 11 peuvent comporter des moyens de détection en position active dans la platine (9), de moyens portatifs en forme de clé de verrouillage/déverrouillage du chariot, ces moyens portatifs étant désignés par la référence générale (13) sur cette figure.

Ces moyens en forme de clé de verrouillage/déverrouillage du chariot peuvent par exemple se présenter sous la forme d'un jeton ou d'une pièce de monnaie de type classique, ou encore sous la forme d'une carte comme par exemple sous la forme d'une carte à circuits intégrés.

De façon classique, l'utilisateur doit alors introduire dans la platine de commande (9) et plus particulièrement dans un logement correspondant de celle-ci, ces moyens en forme de clé de verrouillage/déverrouillage pour déverrouiller le système de motorisation et donc le chariot.

Dans le système selon l'invention ces moyens en forme de clé de verrouillage/déverrouillage, lorsqu'ils sont introduits en position active dans la platine, manoeuvrent par exemple à la fermeture, un interrupteur désigné par la référence générale (14), pour autoriser le fonctionnement du système.

Les moyens de contrôle du sens de déplacement du chariot et de régulation de son allure de déplacement, désignés par la référence générale (12) sur cette figure, peuvent comporter par exemple un commutateur d'inversion d'alimentation désigné par la référence générale (15) sur cette figure, associé par exemple à des moyens de régulation de vitesse désignés par la référence générale 16 et schématisés par une résistance variable sur cette figure.

On conçoit alors que l'utilisateur peut sélectionner le sens de déplacement du chariot et commander la vitesse de déplacement de celui-ci grâce à ces moyens.

Il va de soi bien entendu que différents modes de réalisation des différents éléments de cette platine de commande peuvent être envisagés.

Cette platine de commande désignée par la référence générale (9) est reliée à une partie des moyens de commande d'alimentation, interposée entre les moyens de stockage d'énergie électrique (1) et les moyens de motorisation (4). Cette partie de ces moyens de commande est désignée par la référence générale (17) sur cette figure et comporte par exemple des moyens de hachage de tension désignée par la référence générale (18) et des moyens d'inversion de tension désignés par la référence générale (19), dont le fonctionnement est piloté par l'utilisateur grâce à la platine de commande (9).

Les moyens d'inversion de tension (19) permettent d'alimenter les moyens de motorisation dans un sens ou dans l'autre pour permettre le déplacement du chariot en marche avant ou en marche arrière.

Les moyens de hachage permettent quant à eux de hacher la tension d'alimentation des moyens de motorisation pour réguler leur vitesse de rotation et donc la vitesse de déplacement du chariot.

Ces différents moyens peuvent présenter n'importe quelle structure appropriée connue dans l'état de la technique.

On conçoit alors que le système de motorisation selon l'invention présente un certain nombre d'avantages par rapport aux systèmes de l'état de la technique.

En effet, en utilisant deux moteurs électriques connectés en série et associés chacun à l'une des roues correspondantes du chariot, il n'est plus nécessaire d'utiliser un différentiel entraînant en rotation les deux roues du chariot à partir d'un seul moteur.

Ceci permet de simplifier la structure des moyens d'entraînement des roues et donc d'augmenter la fiabilité du système de motorisation.

Par ailleurs, l'utilisation de la platine de commande, telle qu'elle vient d'être décrite et des moyens de hachage et d'inversion de tension, permet de contrôler de manière extrêmement fiable et précise le fonctionnement des moteurs pour contrôler en toutes circonstances, le déplacement du chariot.

Le fonctionnement de ces moyens de motorisation est piloté par un interrupteur de marche/arrêt et par des moyens de verrouillage/déverrouillage pour améliorer la sécurité d'utilisation du chariot. De plus ces moyens de verrouillage/déverrouillage peuvent constituer également des moyens d'antivol du chariot dans la mesure où il est possible de contrôler la diffusion des moyens portatifs en forme de clé de verrouillage/déverrouillage, adaptés pour être engagés dans la platine.

En effet, ces moyens peuvent présenter, comme cela a été indiqué précédemment, la forme d'une carte à circuits intégrés dans lesquels peut être stocké par exemple un code secret de déverrouillage adapté pour être lu par le reste des circuits de la platine, cette carte étant par exemple diffusée de façon contrôlée à des utilisateurs identifiés et amenés d'une façon ou d'une autre à restituer cette carte après utilisation du chariot afin d'éviter tout vol de celui-ci.

Selon un mode de réalisation particulier, le système selon l'invention comporte un lecteur de carte de consignation du véhicule de l'utilisateur. La poignée comporte un lecteur de carte, notamment, mais non exclusivement, de carte à mémoire. Ce lecteur est destiné à recevoir une carte déclenchant la mise en fonction du moteur électrique. La carte peut être une carte comportant un code d'identification coopérant avec un lecteur de carte associé à un circuit de contrôle de l'authenticité de la carte. Ce code peut être comparé à une liste de codes mémorisés dans un fichier mémoire, ou à un code personnel complémentaire saisi par l'utilisateur.

En l'absence de carte, ou en cas d'introduction d'une carte non reconnue, ou d'un code personnel erroné, le moteur électrique du chariot n'est pas activé et le chariot n'est pas utilisable.

Cette carte peut être distribuée par un équipement prévu à l'entrée d'un parking pour le stationnement des voitures des utilisateurs. Le portique d'entrée est commandé par une borne délivrant à chaque conducteur une carte d'utilisation. Cette carte permet au conducteur d'utiliser un chariot disponible dans le parking ou à proximité du parking. De préférence, le nombre de places de stationnement est sensiblement identique aux nombres de chariots.

Lorsque l'utilisateur a terminé ses courses, il range le chariot motorisé à un emplacement spécifique. Le rangement à un emplacement désigné autorise la libération de la carte. Cette carte est exigée pour commander l'ouverture de la barrière de sortie. A défaut, le conducteur ne pourra pas sortir son véhicule du parking.

La carte remplit donc un rôle de consignation du véhicule, et limite les risques de vol de chariot.

## Revendications

1. Système de motorisation d'un chariot de transport d'objets, du type comportant des moyens (1) de stockage d'énergie électrique à courant continu, raccordés à travers des moyens de commande d'alimentation (3) à des moyens de motorisation (4) associés à au moins deux roues (5,6) du chariot, **caractérisé en ce que** les moyens de motorisation (4) comprennent deux moteurs électriques (7,8) connectés en série, associés chacun à l'une des roues correspondantes (5,6) du chariot et présentant chacun une tension nominale de fonctionnement égale à la moitié de la tension nominale de sortie des moyens de stockage d'énergie électrique (1).

2. Système de motorisation d'un chariot de transport d'objets selon la revendication 1, **caractérisé en ce que** les moyens de stockage d'énergie électrique (1) sont associés à des moyens de charge (2) de ceux-ci.

3. Système de motorisation d'un chariot de transport d'objets selon la revendication 1 ou 2, **caractérisé en ce que** les moyens de commande d'alimentation (3) comprennent une platine de commande (9) munie d'un interrupteur de marche/arrêt (10), de moyens (11) de verrouillage/déverrouillage de la commande de l'alimentation des moyens de motorisation et de moyens (12) de contrôle du sens de déplacement du chariot et de régulation de son allure de déplacement.

4. Système de motorisation d'un chariot de transport d'objets selon la revendication 3, **caractérisé en ce que** les moyens de verrouillage/déverrouillage (11) comportent des moyens (14) de détection en position active dans la platine (9), de moyens portatifs (13) en forme de clé de verrouillage/déverrouillage du chariot.

5. Système de motorisation d'un chariot de transport d'objets selon la revendication 4, **caractérisé en ce que** les moyens en forme de clé se présentent sous la forme d'un jeton ou d'une pièce de monnaie.

6. Système de motorisation d'un chariot de transport d'objets selon la revendication 4, **caractérisé en ce que** les moyens en forme de clé se présentent sous la forme d'une carte à circuits intégrés.

7. Système de motorisation d'un chariot de transport d'objets selon l'une quelconque des revendications 4 à 6, **caractérisé en ce que** les moyens de détection comprennent un interrupteur (14) dont la fermeture est pilotée lors de l'engagement des moyens en forme de clé (13) dans la platine 9.

8. Système de motorisation d'un chariot de transport d'objets selon l'une quelconque des revendications précédentes, **caractérisé en ce que** les moyens de commande d'alimentation (3) comprennent des moyens de hachage (18) et d'inversion (19) de la tension d'alimentation des moyens de motorisation (14).

9. Système de motorisation d'un chariot de transport d'objets selon l'une quelconque des revendications précédentes, **caractérisé en ce qu'**il comporte un lecteur de carte de consignation du véhicule de l'utilisateur.

## Claims

1. Motor drive system for an object transport carriage of the type including means (1) of storing DC electrical energy, connected through power supply control means (3) to motor drive means (4) associated with at least two wheels (5, 6) of the carriage, **characterised in that** the motor drive means (4) comprise two electrical motors (7, 8) connected in series, each associated with one of the corresponding wheels (5, 6) of the carriage and each with a nominal operating voltage equal to half the nominal output voltage of the electrical energy storage means (1).

2. Motor drive system for an object transport carriage according to claim 1, **characterised in that** the electrical energy storage means (1) are associated with means (2) of charging the storage means.

3. Motor drive system for an object transport carriage according to claim 1 or 2, **characterised in that** the power supply control means (3) comprise a control plate (9) provided with an On / Off switch (10), means (11) of locking / unlocking the power supply control of the motor drive means, and means (12) of controlling the direction of displacement of the carriage and regulating its displacement speed.

4. Motor drive system for an object transport carriage according to claim 3, **characterised in that** the locking /unlocking means (11) comprise means (14) to detect if portable means (13) being in the form of a carriage locking / unlocking key, are in active position in the plate (9).

5. Motor drive system for an object transport carriage according to claim 4, **characterised in that** the means in the form of a key are in the form of a token or a coin.

6. Motor drive system for an object transport carriage according to claim 4, **characterised in that** the means in the form of a key are in the form of an integrated circuit board.

7. Motor drive system for an object transport carriage according to any one of claims 4 to 6, **characterised in that** the detection means comprise a switch (14) whose closing is activated when the means in the form of a key (13) are inserted in the plate (9).

8. Motor drive system for an object transport carriage according to any one of the previous claims, **characterised in that** the power supply control means (3) comprise clipping means (18) and inversion means (19) of the power supply voltage of the motor drive means (14).

9. Motor drive system for an object transport carriage according to any one of the previous claims, **characterised in that** it comprises a locking card reader for the user's vehicle.

## Patentansprüche

1. Motorisierungssystem eines Wagens für den Transport von Gegenständen und zwar ein Typ, der Mittel (1) zur Speicherung von Gleichstrom umfasst, die über Mittel zur Steuerung der Versorgung (3) an Motorisierungsmittel (4) angeschlossen sind, die mit mindestens zwei Rädern (5, 6) des Wagens verbunden sind, **dadurch gekennzeichnet, dass** die Motorisierungsmittel (4) zwei in Reihe geschaltete elektrische Motoren (7, 8) umfassen, die jeweils mit einem der entsprechenden Räder (5, 6) des Wagens verbunden sind und jeweils eine Nennbetriebsspannung aufweisen, die gleich der Hälfte der Ausgangsnennspannung der Mittel zur Speicherung der elektrischen Energie (1) ist.

2. Motorisierungssystem eines Wagens zum Transport von Gegenständen gemäß Anspruch 1, **dadurch gekennzeichnet, dass** die Mittel zur Speicherung der elektrischen Energie (1) mit Mittel zum Laden (2) letzterer verbunden sind.

3. Motorisierungssystem eines Wagens zum Transport von Gegenständen gemäß Anspruch 1 oder 2, **dadurch gekennzeichnet, dass** die Mittel zur Steuerung der Versorgung (3) eine Steuerungsplatine (9) umfassen, die mit einem Ein-/Ausschalter (10), mit Mitteln (11) zum Verriegeln/Entriegeln der Steuerung der Versorgung der Motorisierungsmittel und der Mittel (12) zur Kontrolle der Verschieberichtung des Wagens und der Regelung seines Verschiebeablaufs ausgerüstet ist.

4. Motorisierungssystem eines Wagens zum Transport von Gegenständen gemäß Anspruch 3, **dadurch gekennzeichnet, dass** die Mittel zum Verriegeln/Entriegeln (11) Mittel (14) zur Erfassung in aktiver Position in der Platine (9), tragbare Mittel (13) in Form eines Verriegelungs/Entriegelungsschlüssels des Wagens umfassen.

5. Motorisierungssystem eines Wagens zum Transport von Gegenständen gemäß Anspruch 4, **dadurch gekennzeichnet, dass** die Mittel in Schlüsselform in Form einer Berechtigungsmarke oder eines Geldstücks vorliegen.

6. Motorisierungssystem eines Wagens zum Transport von Gegenständen gemäß Anspruch 4, **dadurch gekennzeichnet, dass** die Mittel in Schlüsselform in Form einer Karte mit integriertem Schaltkreis vorliegen.

7. Motorisierungssystem eines Wagens zum Transport von Gegenständen gemäß einem der Ansprüche 4 bis 6, **dadurch gekennzeichnet, dass** die Erfassungsmittel einen Schalter (14) umfassen, dessen Schließen bei dem Eingriff der Mittel in Schlüsselform (13) in der Platine 9 gesteuert wird.

8. Motorisierungssystem eines Wagens zum Transport von Gegenständen gemäß einem der vorherigen Ansprüche, **dadurch gekennzeichnet, dass** die Mittel zur Steuerung der Versorgung (3) Mittel zum Zerhacken (18) und zur Umkehrung (19) der Versorgungsspannung der Motorisierungsmittel (14) umfasst.

9. Motorisierungssystem eines Wagens zum Transport von Gegenständen gemäß einem der vorherigen Ansprüche, **dadurch gekennzeichnet, dass** es einen Kartenleser zur Hinterlegung des Fahrzeugs des Benutzers umfasst.
